# FASCICULE DE BREVET EUROPEEN

(11) **EP 3 496 875 B1**
(45) Date de publication et mention de la délivrance du brevet: **22.04.2020**
(21) Numéro de dépôt: 18769598.6
(22) Date de dépôt: 27.08.2018
(51) Int. Cl.: B07C 5/00, B26D 7/00, B09B 3/00, B09B 5/00, B26F 1/02

(54) **MACHINE DE TRI SEPARATIF DES MATIERES DANS LES DECHETS D'UNE CARTE A PUCE, AVEC DESTRUCTION DES ELEMENTS CONFIDENTIELS**
VORRICHTUNG ZUM SORTIEREN VON KOMPONENTEN EINER SMARTCARD UND ZERSTÖRUNG DER VERTRAULICHEN ELEMENTEN
SORTING MACHINE TO SEPARATE CONSTITUENTS FROM A SMARTCARD AND DESTRUCTION OF CONFIDENTIAL MATERIAL

(30) Priorité: 18.10.2017 FR 1759780
(43) Date de publication de la demande: 19.06.2019
(73) Titulaire: ADIMAS, 78370 Plaisir (FR)
(72) Inventeur: RAUSZ, Elisabeth, 78370 Plaisir (FR); BRODZKI, Jan, 78370 Plaisir (FR)
(74) Mandataire: IPAZ
(86) Numéro de dépôt international: PCT/EP2018/072998
(87) Numéro de publication internationale: WO 2019/076517

(56) Documents cités:
- DE-A1-102010 022 514
- US-B1- 6 568 612

## Description

La présente invention se rapporte à une machine permettant un recyclage efficace des déchets d'une carte à puce. Elle concerne plus particulièrement le recyclage des déchets de cartes à puce au format ISO 1FF/ ID-1.

Ces déchets subissent la gestion et le suivi particulaires, privilégiant la sécurité du fait de leur caractère confidentiel.

Pour assurer la sécurité des éléments technologiques et personnels contenues dans la puce et/ou imprimés (et/ou embossées) sur les cartes, le traitement pratiqué est la destruction par déchiquetage-broyage entièrement.

Le problème de recyclage des matières qui se pose alors, concernant ce déchet, est le fait que les broyats ainsi préparés, constituent un mélange d'un plastique environ 98-97 % et des métaux en faible quantité, environ 2-3% du poids de la carte. Ces métaux peuvent être : or, palladium, cuivre, nickel.

Pour les filières de recyclage des plastiques, la présence de métaux constitue une pollution pénalisante pour leur technologie. Les broyats de cartes sont traités en gros volume par type de plastique, dans un flux commun avec d'autres déchets de provenances diverses. Des métaux, tout comme de diverses impuretés, sont arrêtés sur des filtres qui nécessitent le changement fréquent. Les matières arrêtées sur les filtres, y compris donc des puces broyées, ne sont pas recyclées.

Lorsque les broyats sont dirigés plutôt vers les filières de recyclage des métaux précieux, un autre problème se pose. Ces filières ne savent pas recycler les plastiques en préservant leurs caractéristiques intrinsèques. Dans le procédé de ces filières, les broyats sont brulés (incinérés), avec éventuellement, la récupération d'énergie de combustion. Au sens de la directive 2005/32/CE du Parlement européen et du Conseil du 6 juillet 2005, les plastiques ne sont donc pas recyclés, car le recyclage est le retraitement de déchets, dans un processus de production, aux fins de leur fonction initiale ou à d'autres fins mais à l'exclusion de la valorisation énergétique.

Le mode de recyclage actuel de déchets de cartes à puce provoque de pertes de matières importantes.

Les déchets incinérés ou mis en poubelle constituent une perte au même titre que les refus de tri.

L'enjeu du recyclage est toujours de conserver le plus longtemps possible les qualités intrinsèques des matières et leurs caractéristiques pour en maximiser le nombre de cycles de vie matière.

On connait par exemple le document DE102010022514 décrivant un procédé de destruction mécanique d'une puce à l'aide d'un poinçon. Mais ce document ne traite nullement de l'efficacité de recyclage.

La présente invention a donc pour but d'améliorer le nombre de cycles de vie matière.

Un autre but de l'invention est d'assurer une destruction optimale des éléments confidentiels.

On atteint au moins l'un des objectifs précités avec une machine de tri séparatif des déchets d'une carte à puce, comprenant :
- un module de découpage apte à découper au moins un élément dans une zone prédéfinie de la carte à puce introduite dans la machine,
- au moins trois collecteurs distincts pour recueillir respectivement des éléments découpés polluants, des éléments découpés métalliques et des éléments découpés plastiques,
- un module de tri permettant de diriger l'élément découpé vers l'un desdits au moins trois collecteurs, et
- un broyeur disposé entre le module de découpage et le collecteur pour recueillir les éléments découpés métalliques, ce broyeur étant destiné à broyer tout élément découpé métallique allant dans ce collecteur afin d'assurer la destruction immédiate des informations confidentiels physiques et logiques contenu dans la puce.

Avantageusement, les éléments découpés métalliques peuvent contenir une puce entière. Cette dernière comporte des parties métalliques mais peut également comporter des parties ou modules non métalliques. L'ensemble est traité comme un élément métallique.

La machine selon l'invention permet d'isoler les matières contenues dans un déchet d'une carte à puce de façon à ce que la destruction soit efficace et que le recyclage le soit également.

Avec la machine selon l'invention, on procède donc à la séparation triée des matières constituantes de la carte à puce, avec la destruction des éléments contenants les informations confidentiels technologiques et personnels. Cela permet d'éviter un broyage massif de déchets des cartes sans distinction.

On conserve ainsi les qualités intrinsèques des matières plastiques car elles ne contiennent pas ou très peu de matières étrangères, et on respecte en même temps l'exigence de sécurité des éléments confidentiels contenus dans les déchets des cartes à puce. Il est alors possible de diriger les déchets en l'état, vers des filières spécialisées pour chaque matière.

La présente invention comporte un double avantage, d'une part le tri optimisé des matières constituantes et d'autre part l'ouverture à la possibilité de lever totalement ou partiellement, le besoin de sécurisation très coûteuse de la chaine de gestion de ces déchets.

Avantageusement, la machine selon l'invention peut être disposée au début d'une chaîne de recyclage des matières que sont par exemple le plastique et les métaux. Cette machine peut être de type mécanique consommant peu d'énergie. Il est alors possible d'obtenir une matière première recyclée (MPR) dont l'empreinte carbone serait nettement inférieure à celle de production des plastiques vierges à partir du pétrole, à savoir:
- pour le PVC et l'ABS recyclés, cela représente jusqu'à 89% d'émissions de CO₂ évitées,
- pour le PET recyclé, jusqu'à 92% d'émissions de CO₂ évitées.

A titre d'exemple, on sait notamment que le nombre de cartes de paiement délivrées en France en une seule année 2014 était de 81040210 unités. A titre indicatif, cela représente potentiellement autant de déchets en 2017, soit l'équivalent approximatif de 486 tonnes de plastiques non recyclés car majoritairement mis à la poubelle compte tenu du fait qu'aucune collecte des cartes en fin de vie n'est véritablement organisée.

Compte tenu du maintien de niveau des cartes délivrées d'une année sur l'autre, et du fait qu'elles sont majoritairement en PVC, cela représente l'émission de gaz à effet de serre pour ce plastique, de 817500 Kg équivalent CO2 qui aurait pu être évités grâce au recyclage, ou 267 tonne équivalent pétrole (TEP) qui aurait pu être économisés.

Selon une publication officielle du Commissariat Général au développement durable n°645 Juin 2015, ce volume de pétrole pouvant être économisé, aurait pu satisfaire la consommation énergétique annuelle de 148 foyers français occupant une maison individuelle ou 334 familles vivant dans un logement d'un immeuble collectif.

Selon l'invention, le broyeur peut être un broyeur amovible ou non, interne ou externe, ou de préférence une chambre de broyage complètement intégrée.

Selon l'invention, le module de découpage peut comprendre au moins un poinçon et une matrice. Le poinçon et la matrice sont complémentaires et dimensionnés de façon à découper des zones prédéfinies comportant des éléments particuliers.

Par ailleurs, le poinçon et/ou la matrice peuvent être amovibles de façon à être échangés avec un autre poinçon et/ou une autre matrice de dimensions de zones différentes. On obtient ainsi une machine universelle car le poinçon est interchangeable tout comme la matrice, ce qui permet de n'utiliser la machine que par exemple pour le traitement d'un déchet donné, par exemple la partie métallique seule, des zones de plastiques seules ou des zones polluantes seules. Cela permet aussi d'adapter la machine aux spécificités (emplacement des éléments sur la carte à puce) différentes.

Selon une caractéristique avantageuse de l'invention, le module de découpage est un module de découpage laser. Il peut s'agir d'un dispositif électronique équipé d'un laser pour cibler les éléments spécifiques de la carte, il peut comporter un ou plusieurs lasers capables d'être paramétré en temps réel ou non pour découper différentes zones prédéfinies sur une même carte à puce.

Avantageusement, le module de tri peut être fixe ou mobile. Lorsqu'il est fixe, il définit trois voies de guidage vers les collecteurs, chaque voie pouvant être associée à une ou plusieurs zones de la carte à puce. Lorsqu'il est mobile, il peut s'agir d'une lame ou d'un couloir d'aiguillage recevant pour un temps donné des éléments d'une même matière découpés, puis les dirigeant vers le bon collecteur. Dans ce dernier cas, les éléments de matières différentes sont découpés successivement.

Selon une caractéristique avantageuse de l'invention, le broyeur peut être configuré pour transformer des éléments métalliques, contenant de préférence une puce entière, en des broyats de dimension inférieure à 2 mm. Cela répond à l'exigence sécuritaire de confidentialité de données technologiques, physiques et logiques.

Avantageusement, le module de découpage comporte des moyens de découpage pour découper simultanément ou successivement au moins un élément polluant, au moins un élément métallique et au moins un élément plastique. L'élément polluant peut être tout élément polluant introduit dans la carte pour les besoins des technologies actuelles et futures, tel que par exemple une batterie-lithium, un écran LED, autres...

La machine selon l'invention est en phase avec le besoin de la réalité technologique et réglementaire qui fait de la carte dite sans contact, et surtout de la carte à puce pourvue d'une batterie, un équipement électrique et électronique (EEE). Son déchet devient donc un déchet d'équipement électrique et électronique (DEEE) au sens de la Directive 2005/32/CE du Parlement européen et du Conseil du 6 juillet 2005, avec toutes les obligations réglementaires inhérentes à sa gestion.

Selon une caractéristique avantageuse de l'invention, la zone prédéfinie pour le découpage du plastique peut être constitué de plusieurs sous-zones réparties de façon prédéfinie. Sur une carte à puce, des données confidentielles peuvent y figurer sous la forme d'une suite de chiffre et/ou lettre apposée sur une face ou photo personnelle. Pour que cette suite ne puisse plus être entièrement visible, donc ne plus être reconstituée, le module de découpage est conçu pour réaliser plusieurs trous, des sous zones, à des endroits spécifiques de la suite. De cette façon, seulement une partie du plastique de la carte à puce est découpée, ce qui permet de conserver une grande partie du plastique de la carte à puce pour le recyclage, et si les trous sont correctement prévus, la suite confidentielle ne peut plus être reconstituée.

Selon l'invention, les collecteurs distincts peuvent être des bacs amovibles.

Selon une caractéristique avantageuse de l'invention, la machine peut comprendre un module d'alimentation automatique des cartes à puce. Toutefois cette alimentation peut être manuelle ou semi-automatique.

La machine selon l'invention peut également comprendre un module de comptage des cartes à puce à l'entrée de la machine.

Selon une caractéristique avantageuse de l'invention, la zone prédéfinie pour le découpage des éléments métalliques peut être un quadrilatère de dimensions permettant de contenir différents types de puce. On peut ainsi définir une zone de dimension suffisamment grande mais pas trop grande non plus, permettant de traiter un maximum de cartes à puce en utilisant un même module de découpage.

Selon une caractéristique avantageuse de l'invention, la zone prédéfinie pour le découpage des éléments polluants présente une forme apte à contenir différents types de batteries et/ou autres éléments polluants intégrés dans la carte à puce.

Avantageusement, la machine selon l'invention peut comporter une autre sortie pour le reste de la carte à puce une fois l'élément découpé.

De préférence, elle peut constituer un ensemble tout-en-un formant bloc.

D'autres caractéristiques et avantages de l'invention apparaîtront à la lecture de la description détaillée de mises en œuvre et de modes de réalisation au regard de figures annexées sur lesquelles :
La figure 1 est une vue schématique de face d'une carte à puce bancaire,
La figure 2 es une vue schématique d'un mode de réalisation de la machine selon l'invention dans laquelle le module de découpage comprend une matrice et un poinçon, il est possible d'envisager un outillage multi-poinçons,
La figure 3 est une vue schématique d'un mode de réalisation de la machine selon l'invention dans laquelle le module de découpage comprend un dispositif laser et un module de tri mobile ; ce dernier pouvant tout à fait être combiné avec un ensemble matrice et poinçon ; de la même manière le dispositif laser peut être combiné avec un module de tri fixe,
Les figures 4 à 7 sont des vues schématiques illustrant des zones prédéfinies de découpage dans une carte ou dans des cartes différentes.

Sur les figures, les éléments communs à plusieurs figures conservent la même référence.

La machine selon la présente invention peut être mis en œuvre pour le traitement des déchets générés lors de la production des produits semi-finis et/ou finis (« new scrap ») de cartes à puce, ainsi que des déchets post-consommation de la carte à puce, dit « en fin de vie » (« old scrap »). Elle est à mettre en œuvre avant de diriger les déchets vers des filières spécialisées dans le recyclage en fonction des matières constituant les déchets.

Par carte à puce, on entend tout types de cartes, avec ou sans contacts : cartes bancaires, cartes SIM, cartes Vitale, cartes d'identité, cartes de décryptage de TV ainsi que toutes les versions de cartes privatives de diverses enseignes commerciales issues d'une même technologie, y compris les déchets de fabrication de cartes SIM 2FF, 3FF, 4FF, avec la puce implantée par deux, quatre voire plus de puces, sur la même carte au format ISO/IEC 7810 :2003, ID-1, appelée aussi format 1FF par exemple.

Bien que l'invention n'y soit pas limitée on va maintenant décrire la mise en œuvre de la machine selon l'invention dans le traitement de carte à puce bancaire.

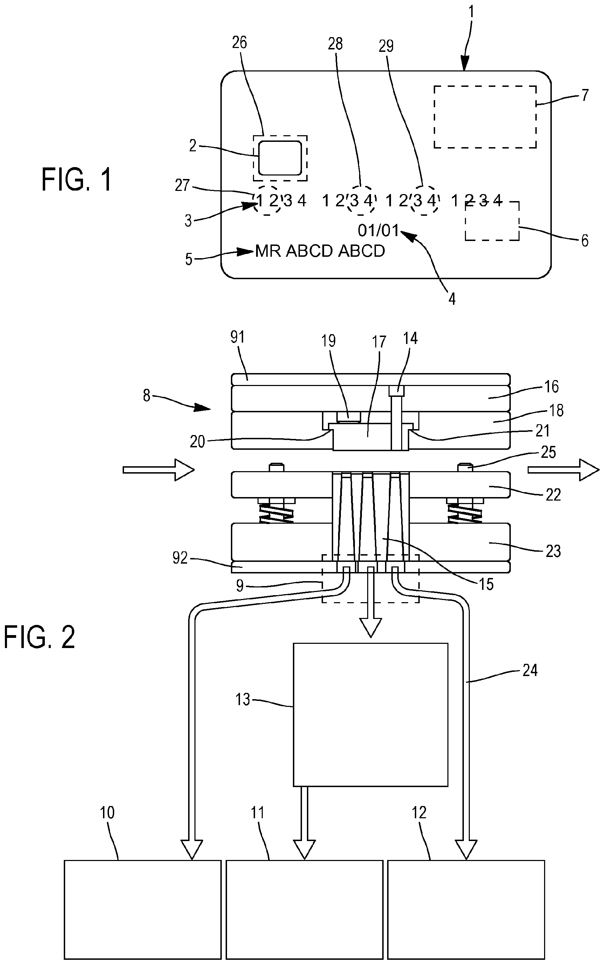

La figure 1 illustre une vue générale de la face d'une carte à puce bancaire. On distingue un corps en plastique 1 comprenant une puce électronique 2 intégrée et renfermant de l'information confidentielle.

On distingue également un numéro 3 sous la forme d'une suite de chiffres regroupés par quatre. Ce numéro est réalisé sur une grande partie de la longueur de la carte, sous la puce 2, de façon imprimée ou embossé.

On distingue également une date d'expiration de la carte à puce ainsi que le nom 5 du titulaire de la carte à puce. La date et le nom peuvent également être réalisés de façon imprimée ou embossée.

Un hologramme de sécurité 6, illustré en pointillé, est disposé sur la face arrière de la carte à puce 1. Il s'agit d'une plaque fine métallique plaquée à l'arrière de la carte et permet de lutter contre la contrefaçon.

Une batterie 7 est également prévue. Elle alimente dans certaines cartes bancaires la génération du cryptogramme dynamique CVV à 3 chiffres.

La présente invention a pour but de découper chacun des éléments 2 à 7 identifiés, de les trier en fonction de leur composition, principalement plastique, métallique ou polluant, puis les diriger dans des collecteurs indépendants. La partie restante de la carte, en plastique notamment est également récupérée pour un recyclage. Avec un tel fonctionnement, la sécurité est respectée car les informations confidentielles sont détruites, et le recyclage est optimisé car chaque collecteur (ainsi que la sortie générale du plastique restant) récupère des déchets majoritairement de même composition, de même matière.

La machine selon l'invention peut être configurée pour traiter tout ou partie des éléments identifiés. Par exemple, la machine peut être configurée pour découper uniquement la puce électronique. Elle peut également être configurée pour découper uniquement les éléments bosselés, ou uniquement les éléments polluants.

Sur la figure 2 on distingue une machine selon l'invention. Cette machine comprend notamment un module de découpage globalement référencé 8, pour recevoir la carte à puce, découper les éléments disposés dans des zones prédéfinies, puis éjecter le restant de la carte à puce vers la sortie, par exemple dans un bac récupérateur de sortie non représenté.

La figure 2 illustre également un module de tri globalement référence 9 pour guider chaque élément découpé vers un collecteur.

Une plaque de choc supérieur 91 et une plaque de choc inférieur 92 sont disposées respectivement au-dessus de la plaque porte poinçon supérieur 16 et sous la plaque porte poinçon inférieur 23.

On distingue trois collecteurs 10-12. Le collecteur 10 est destiné à recevoir les éléments découpés polluants. Le collecteur 11 est destiné à recevoir les éléments découpés et broyés métalliques. Avantageusement, un broyeur 13 est disposé ente le module de découpage et le collecteur 11. Le collecteur 12 est destiné à recevoir les éléments découpés plastiques, autres que le restant de la carte à puce qui est évacué vers un bac récupérateur de sortie.

Le module de découpage 8 comprend un ensemble poinçon 14 et matrice 15 conçu et disposé pour perforer la carte à puce dans une zone prédéfinie qui est à l'endroit où se trouve la puce électronique. Ainsi toutes les cartes de même type qui seront introduites dans la machine, seront perforées au même endroit, dans la même zone prédéfinie.

Le poinçon 14 est porté sur sa partie supérieure par une plaque porte poinçon supérieur 16. La partie inférieure du poinçon émerge de la plaque porte poinçon supérieur 16 et est reçu de façon coulissante dans une poussette 17. Cette dernière est maintenue par un support 18 et peut coulisser dans un évidement réalisé à l'intérieur de ce support 18. Le module de découpage est conçu de sorte que la poussette 17 est apte à coulisser par rapport à l'ensemble comprenant le poinçon 14, le support 18 et la plaque porte poinçon supérieur 16. Les constituants de cet ensemble n'effectuent pas de mouvements relatifs des uns par rapport aux autres.

Un ressort 19 est prévu dans l'évidement du support 18. Son rôle est de maintenir la poussette dans une position de repos où sa face inférieure dépasse légèrement de la surface inférieure du support. L'action du ressort 19 et des épaulements 20 et 21 permet de maintenir la poussette 17 dans cette position de repos.

Un dévêtisseur 22 est prévu à distance et en opposition de la surface inférieure du support 18. Il est associé à une plaque 23 de porte matrice. Lorsque la carte à puce est insérée entre la poussette 17 et la matrice 15, le mouvement relatif du dévêtisseur 22 par rapport à la plaque 23 de porte matrice permet de rapprocher la matrice 15 de la poussette 17. Des guides 25 sont prévus pour le mouvement relatif du dévêtisseur 22 par rapport à la plaque 23. Ainsi, la matrice 15 vient buter contre la poussette 17 qui s'enfonce légèrement contre le ressort 19. Le poinçon 14 vient percer la carte à l'endroit souhaité, par exemple à l'endroit d'une zone en plastique comportant des chiffres bosselés. L'élément découpé est ensuite guidé par un circuit d'évacuation 24 vers le collecteur de plastique 12. Il s'agit là d'un exemple où seul un élément en plastique a été découpé. La matrice et le poinçon peuvent être plus complexes et permettre de découper plusieurs éléments simultanément ou successivement et les envoyer vers les collecteurs.

Lorsqu'on prévoit de découper simultanément plusieurs éléments de même matière, on peut envisager plusieurs circuits d'évacuation emmenant des éléments de même matière découpés dans des zones différentes vers un même collecteur.

Comme on le voit sur la figure 1, si l'on souhaite découper la puce électronique 2, la zone prédéfinie peut être symbolisée par un rectangle 26 entourant la puce électronique et de dimension suffisamment grande pour englober différentes tailles de puce. Une autre zone prédéfinie peut être confondue avec les dimensions de l'hologramme de sécurité 6. Ainsi, lorsque la carte à puce pénètre une machine selon l'invention configurée pour découper la puce électronique 2 et l'hologramme de sécurité 6, les zones prédéfinies 26 et 6 seront découpées de la carte à puce puis transférées vers le broyeur 13 par des voies d'évacuation différentes de façon à être déchiquetées et déposées dans le collecteur 11.

Comme on le voit également sur la figure 1, si l'on souhaite rendre illisible le numéro complet 3, on prévoit de découper des sous-zones prédéfinies 27-29. Des poinçons et matrice seront prévus pour découper simultanément ces trois sous-zones de façon à les envoyer par un ou plusieurs circuits d'évacuation vers le collecteur 12.

Comme on le voit encore sur la figure 1, si l'on souhaite découper la batterie 7 qui est considérée comme un élément polluant de la carte à puce, on prévoit un poinçon et une matrice permettant cette réalisation.

De préférence, la machine comporte un ensemble de poinçons et une matrice conçus pour découper simultanément l'ensemble des éléments 2-7 et les répartir dans les différents collecteurs, le reste allant vers un bac de sortie.

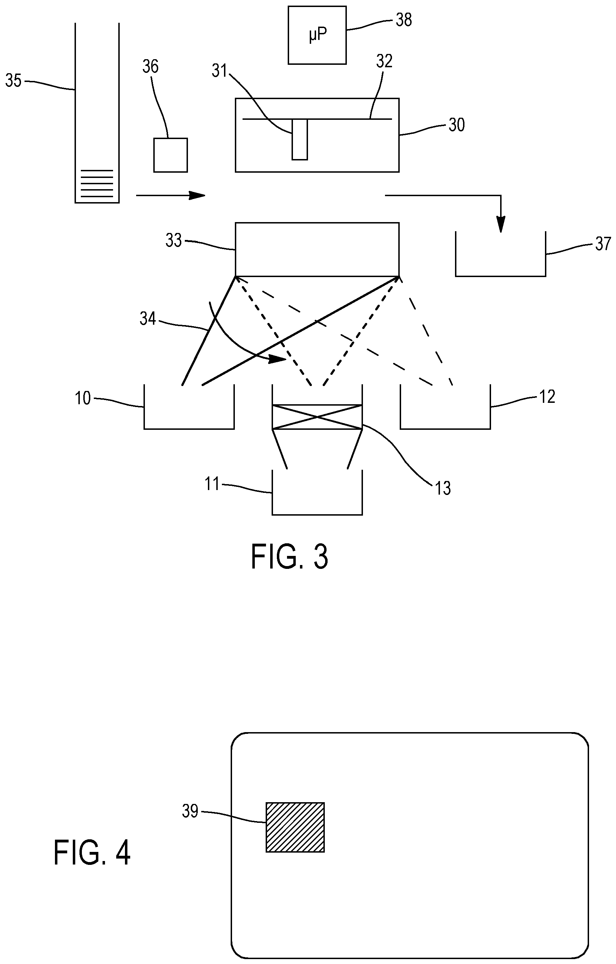

Sur la figure 3, est illustré un autre mode de réalisation de la machine selon l'invention dans lequel le système de poinçon et matrice est remplacé par un dispositif à découpage laser 30 comportant un ou plusieurs lasers 31 permettant de découper les zones prédéfinies. Ce laser ou ces lasers peuvent être disposés sur un guide 32 permettant de balayer toute la surface de la carte à puce. Cette dernière est prévue pour être introduite et posée sur un support 33. En guise de module de tri on peut utiliser le même que celui de la figure 2 mais on peut aussi utiliser un module de tri mobile, c'est-à-dire équipé par exemple d'un entonnoir mobile 34 qui est orienté vers l'un des collecteurs 10, 12 ou broyeur 13 en fonction de la matière découpée.

Dans les modes de réalisation des figures 2 et 3, on prévoit également en entrée, un dispositif d'alimentation, représenté uniquement sur la figure 3, automatique, manuelle ou semi-automatique 35 pour envoyer la carte vers l'intérieur de la machine dans le module de découpage. Un compteur permet de comptabiliser le nombre de carte à puce traité. Un bac récupérateur permet de recueillir le reste de la carte à puce une fois traitée. L'ensemble est piloté au moyen d'une unité de traitement.

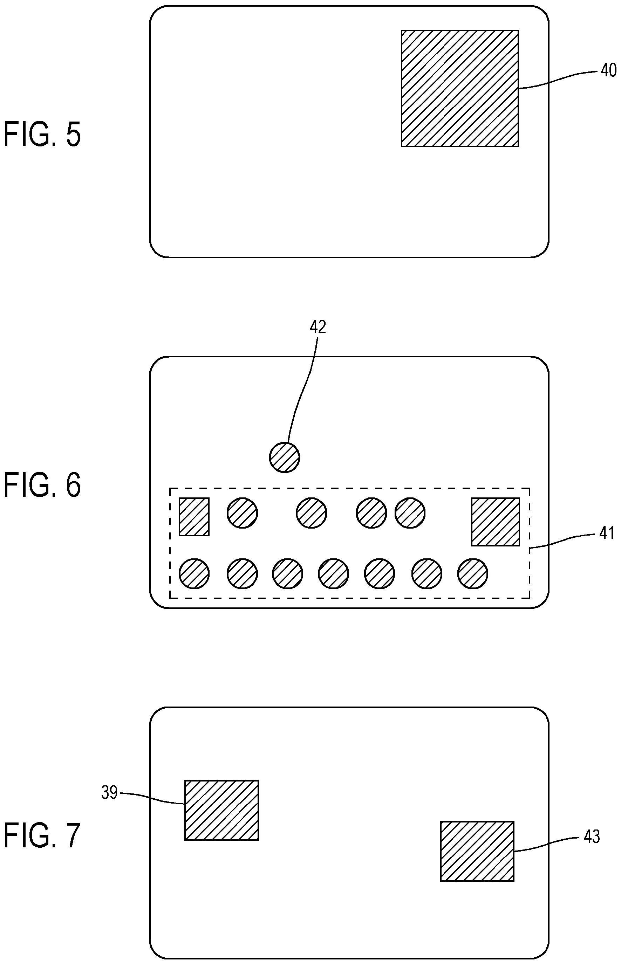

Ainsi, dans un traitement unitaire d'une carte par la machine selon l'invention, les actions suivantes sont réalisées :
ACTION 1 : Entrée de la carte avec le comptage de cartes traitées;
ACTION 2 : Découpage et éjection des éléments métalliques : puce(s) entière(s), évacuation des éléments découpés et destruction dans le broyeur 13, puis collecte des broyats dans le collecteur 11. Selon les besoins, des puces RFID peuvent aussi être découpés et évacuées dans ce flux, tout comme, éventuellement, des antennes. Sur la figure 4 on voit un exemple d'une carte à puce dans laquelle une zone contenant une puce a été découpée et éjectée. Le cadre 39 est un contour de la découpe à effectuer pour désolidariser la puce de la carte. Ses dimensions permettent de couvrir tous les cas de dimensions de puces : cartes bancaires, cartes d'identités, cartes Vitale, cartes SIM etc... Sur la figure 7 on voit un exemple de carte à puces comportant deux puces 39 et 43.
ACTION 3 : Découpage totale et éjection des parties contenant des polluants entiers avec collecte séparée. Sur la figure 5 est illustré un exemple d'une carte dépourvue de la zone contenant une batterie Lithium implantée. Le cadre 40 est un contour de la découpe à effectuer pour désolidariser cette zone de la carte.
ACTION 4 : Destruction par découpage appropriée, éjection et collecte des éléments de personnalisation physique de la carte de type : carte de santé, carte d'identité, carte bancaire, autres ... Sur la figure 6, la zone 41 représente un exemple de découpage approprié pour destruction du texte embossé dans une carte bancaire (numéro de la carte, identification du possesseur de la carte) mais aussi d'un hologramme non métallique. Le contour 42 correspond au découpage approprié à effectuer pour détruire le code CVV.

Cette action permet la destruction par découpage des éléments confidentiels personnels, qui rend la carte traitée à ce stade : inutilisable, illisible et non reconstructible du simple fait que les éléments éjectés sont collectés séparément par rapport à la carte traitée sortant de la machine dans un flux séparé des cartes traitées.

Pour tous les éléments désolidarisés de la carte, le ciblage préalable est optimisé de manière à préserver le maximum de matières plastiques destinées au recyclage ultérieur des matières.

En d'autres termes, la présente invention tient compte des contraintes à plusieurs niveaux et notamment :
- la sécurité technologique et des données personnelles,
- la préparation des matières pour leur recyclage en circuit court, permettant de conserver au maximum les qualités intrinsèques des matières dans le processus de leurs recyclages respectifs ultérieurs. Ces matières peuvent être:
- Plastiques : PVC, ABS, PET, etc..., cela concerne le restant de la carte découpée à la sortie de la machine ainsi que les éléments de découpes récupérés dans le collecteur 12. Ces plastiques sont prêts à être dirigés en état ou après broyage, vers les filières de recyclage des plastiques.
- Métaux : or, palladium, cuivre, nickel, contenus dans les broyats collectés dans le collecteur 11. Ces broyats sont prêts à être dirigés en état, vers les filières de recyclage des métaux précieux.
- Eléments polluants éventuels, issus des nouvelles technologies présentes et futures, tels que par exemple les batteries au lithium, etc..., contenu dans le collecteur 10. Ces éléments sont à diriger vers les filières spécialisées dans le recyclage de matières dangereuses respectives.

Ainsi avec la machine selon la présente invention, on réalise un tri efficace des matériaux et on répond à l'exigence du respect de la hiérarchie des modes de traitement des déchets consistant à privilégier le recyclage à toute autre valorisation, notamment la valorisation énergétique.

Cette action d'efficacité, constitue une alternative progressiste, par rapport au recyclage pratiqué, de déchets de cartes à puce.

## Revendications

1. Machine de tri séparatif des déchets d'une carte à puce, comprenant :
- un module de découpage (8) apte à découper au moins un élément (2,3,4,5,6,7) dans une zone prédéfinie de la carte à puce introduite dans la machine,
- au moins trois collecteurs (10,11,12) distincts pour recueillir respectivement des éléments découpés polluants, des éléments découpés métalliques et des éléments découpés plastiques,
- un module de tri (9) permettant de diriger l'élément découpé vers l'un desdits au moins trois collecteurs, et
- un broyeur (13) disposé entre le module de découpage et le collecteur pour recueillir les éléments découpés métalliques, ce broyeur étant destiné à broyer tout élément découpé métallique allant dans ce collecteur.

2. Machine selon la revendication 1, **caractérisé en ce que** le module de découpage comprend au moins un poinçon (14) et une matrice (15).

3. Machine selon la revendication 2, **caractérisé en ce que** le poinçon et/ou la matrice sont amovibles de façon à être échangés avec un autre poinçon et/ou une autre matrice de dimensions de zones différentes.

4. Machine selon l'une quelconque des revendications précédentes, **caractérisé en ce que** le module de découpage est un module de découpage laser (30).

5. Machine selon l'une quelconque des revendications précédentes, **caractérisé en ce que** le module de tri est fixe ou mobile.

6. Machine selon l'une quelconque des revendications précédentes, **caractérisé en ce que** le broyeur est configuré pour transformer des éléments métalliques en des broyats de dimension inférieure à 2 mm.

7. Machine selon l'une quelconque des revendications précédentes, **caractérisé en ce que** le module de découpage comporte des moyens de découpage pour découper simultanément ou successivement au moins un élément polluant, au moins un élément métallique et au moins un élément plastique.

8. Machine selon l'une quelconque des revendications précédentes, **caractérisé en ce que** la zone prédéfinie pour le découpage du plastique est constitué de plusieurs sous-zones réparties de façon prédéfinie.

9. Machine selon l'une quelconque des revendications précédentes, **caractérisé en ce que** les collecteurs distincts sont des bacs amovibles.

10. Machine selon l'une quelconque des revendications précédentes, **caractérisé en ce qu'**elle comprend un module d'alimentation automatique (35) des cartes à puce.

11. Machine selon l'une quelconque des revendications précédentes, **caractérisé en ce qu'**elle comprend un module de comptage des cartes à puce à l'entrée de la machine.

12. Machine selon l'une quelconque des revendications précédentes, **caractérisé en ce que** la zone prédéfinie pour le découpage des éléments métalliques est un quadrilatère de dimensions permettant de contenir différents types de puce.

13. Machine selon l'une quelconque des revendications précédentes, **caractérisé en ce que** la zone prédéfinie pour le découpage des éléments polluants présente une forme apte à contenir différents types de batteries et/ou autres éléments polluants intégrés dans la carte à puce.

14. Machine selon l'une quelconque des revendications précédentes, **caractérisé en ce qu'**elle comporte une sortie du reste de la carte à puce une fois l'élément est découpé.

15. Machine selon l'une quelconque des revendications précédentes, **caractérisé en ce qu'**elle constitue un ensemble tout-en-un formant bloc.

## Patentansprüche

1. Sortier- und Trennanlage für die Abfälle einer Chipkarte, welche aufweist:
- ein Schneidmodul (8), das dafür eingerichtet ist, zumindest ein Element (2,3 4,5,6,7) in einem vordefiniertem Bereich der in die Anlage eingeführten Chipkarte auszuschneiden,
- zumindest drei separate Sammler (10, 11, 12) zum Sammeln jeweils der ausgeschnittenen, die Umwelt belastenden Elemente, der ausgeschnittenen metallischen Elemente und der ausgeschnittenen Kunststoffelemente,
- ein Sortiermodul (9), welches das Zuführen des ausgeschnittenen Elements zu einem der zumindest drei Sammler ermöglicht, sowie
- eine Mühle (13), welche zwischen dem Schneidmodul und dem Sammler für das Sammeln der ausgeschnittenen metallischen Elemente angeordnet ist, wobei die Mühle für das Zermahlen sämtlicher für diesen Sammler bestimmten ausgeschnittenen metallischen Elemente bestimmt ist.

2. Sortier- und Trennanlage nach Anspruch 1, **dadurch gekennzeichnet, dass** das Schneidmodul zumindest eine Stanze (14) und eine Matrize (15) aufweist.

3. Sortier- und Trennanlage nach Anspruch 2, **dadurch gekennzeichnet, dass** die Stanze und/oder die Matrize herausnehmbar sind, sodass sie gegen eine andere Stanze und/oder eine andere Matrize mit unterschiedlich dimensionierten Bereichen austauschbar sind.

4. Sortier- und Trennanlage nach einem der voranstehenden Ansprüche, **dadurch gekennzeichnet, dass** das Schneidmodul ein Laserschneidmodul (30) ist.

5. Sortier- und Trennanlage nach einem der voranstehenden Ansprüche, **dadurch gekennzeichnet, dass** das Sortiermodul festgelegt oder beweglich ist.

6. Sortier- und Trennanlage nach einem der voranstehenden Ansprüche, **dadurch gekennzeichnet, dass** die Mühle dafür eingerichtet ist, metallische Elemente in Mahlgut mit Abmessungen kleiner 2 mm zu überführen.

7. Sortier- und Trennanlage nach einem der voranstehenden Ansprüche, **dadurch gekennzeichnet, dass** das Schneidmodul Schneidmittel aufweist, um gleichzeitig oder nacheinander zumindest ein die Umwelt belastendes Element, zumindest ein metallisches Element und zumindest ein Kunststoffelement auszuschneiden.

8. Sortier- und Trennanlage nach einem der voranstehenden Ansprüche, **dadurch gekennzeichnet, dass** der vordefinierte Bereich für das Ausschneiden des Kunststoffs aus mehreren, auf vordefinierte Weise verteilten Teilbereichen gebildet ist.

9. Sortier- und Trennanlage nach einem der voranstehenden Ansprüche, **dadurch gekennzeichnet, dass** die separaten Sammler auswechselbare Behälter sind.

10. Sortier- und Trennanlage nach einem der voranstehenden Ansprüche, **dadurch gekennzeichnet, dass** sie ein automatisiertes Chipkarten-Zuführmodul (35) aufweist.

11. Sortier- und Trennanlage nach einem der voranstehenden Ansprüche, **dadurch gekennzeichnet, dass** sie am Eingang ein Chipkarten-Zählmodul aufweist.

12. Sortier- und Trennanlage nach einem der voranstehenden Ansprüche, **dadurch gekennzeichnet, dass** der vorbestimmte Bereich für das Ausschneiden der metallischen Elemente ein Viereck mit unterschiedlichen Chiparten umfassenden Abmessungen ist.

13. Sortier- und Trennanlage nach einem der voranstehenden Ansprüche, **dadurch gekennzeichnet, dass** der vorbestimmte Bereich für das Ausschneiden der umweltbelastenden Elemente eine für das Umfassen unterschiedlicher Batterien und/oder anderer in der Chipkarte integrierter umweltbelastender Elemente geeignete Form aufweist.

14. Sortier- und Trennanlage nach einem der voranstehenden Ansprüche, **dadurch gekennzeichnet, dass** sie einen Ausgang für den Rest der Chipkarte aufweist, sobald das Element ausgeschnitten ist.

15. Sortier- und Trennanlage nach einem der voranstehenden Ansprüche, **dadurch gekennzeichnet, dass** sie ein Komplettsystem bildet.

## Claims

1. Sorting machine for separating waste from a smart card, comprising:
- a cutting module (8) capable of cutting out at least one element (2,3,4,5,6,7) in a predefined area of the smart card introduced into the machine,
- at least three separate collectors (10,11,12) for collecting respectively cut-out pollutant elements, cut-out metallic elements and cut-out plastic elements,
- a sorting module (9) making it possible to direct the cut-out element towards one of said at least three collectors, and
- a shredder (13) arranged between the cutting module and the collector to collect the cut-out metallic elements, this shredder being intended to shred any cut-out metallic element going into this collector.

2. Machine according to claim 1, **characterized in that** the cutting module comprises at least one punch (14) and one die (15).

3. Machine according to claim 2, **characterized in that** the punch and/or the die are removable in such a way as to be exchanged with another punch and/or another die with different area dimensions.

4. Machine according to any one of the preceding claims, **characterized in that** the cutting module is a laser cutting module (30).

5. Machine according to any one of the preceding claims, **characterized in that** the sorting module is fixed or mobile.

6. Machine according to any one of the preceding claims, **characterized in that** the shredder is configured to convert metallic elements into ground material having dimensions less than 2 mm.

7. Machine according to any one of the preceding claims, **characterized in that** the cutting module comprises cutting means for simultaneously or successively cutting out at least one pollutant element, at least one metallic element and at least one plastic element.

8. Machine according to any one of the preceding claims, **characterized in that** the predefined area for cutting the plastic is constituted by several sub-areas distributed in a predefined manner.

9. Machine according to any one of the preceding claims, **characterized in that** the separate collectors are removable bins.

10. Machine according to any one of the preceding claims, **characterized in that** it comprises an automatic feed module (35) for the smart cards.

11. Machine according to any one of the preceding claims, **characterized in that** it comprises a module for counting the smart cards at the input of the machine.

12. Machine according to any one of the preceding claims, **characterized in that** the predefined area for cutting out the metallic elements is a quadrilateral having dimensions making it possible to contain different types of chip.

13. Machine according to any one of the preceding claims, **characterized in that** the predefined area for cutting out the pollutant elements has a shape capable of containing different types of batteries and/or other pollutant elements integrated in the smart card.

14. Machine according to any one of the preceding claims, **characterized in that** it comprises an output for the rest of the smart card once the element is cut out.

15. Machine according to any one of the preceding claims, **characterized in that** it constitutes an all-in-one assembly forming a single unit.
